# EUROPÄISCHE PATENTSCHRIFT

(11) **EP 3 921 580 B1**
(45) Veröffentlichungstag und Bekanntmachung des Hinweises auf die Patenterteilung: **24.07.2024**
(21) Anmeldenummer: 20720499.1
(22) Anmeldetag: 29.01.2020
(51) Int. Cl.: F24D 19/00, F24D 19/02, F24F 7/013, F24F 12/00, F24F 13/08, F24F 13/10, F24F 13/24, F24F 13/14, F24F 7/00

(54) **SYSTEM ZUR BELÜFTUNG VON RÄUMEN**
SYSTEM FOR VENTILATION OF ROOMS
SYSTÈME D'AÉRATION D'ESPACES

(30) Priorität: 05.02.2019 DE 102019102847
(43) Veröffentlichungstag der Anmeldung: 15.12.2021
(73) Patentinhaber: Zehnder Group International AG, 5722 Gränichen (CH)
(72) Erfinder: OTTO, Frank, 08132 Muelsen (DE); SABACZUK, Frank, 08056 Zwickau (DE); HIRSCH, Christian, 08309 Eibenstock (DE)
(74) Vertreter: Rentsch Partner AG
(86) Internationale Anmeldenummer: PCT/IB2020/050696
(87) Internationale Veröffentlichungsnummer: WO 2020/161565

(56) Entgegenhaltungen:
- EP-A1- 2 642 210
- DE-A1- 19 734 955
- DE-A1- 3 545 648
- DE-A1- 4 002 560
- DE-U1- 29 906 375

## Beschreibung

Die Erfindung betrifft ein System zur Belüftung, insbesondere zur Klimatisierung, von Räumen, welches in eine Wand, insbesondere eine Außenwand, eines Hauses durchgreifende Ausnehmung einsetzbar ist, aufweisend ein Rohr, in welchem ein Wärmetauscher angeordnet ist, und aufweisend eine das Rohr einendseitig teilweise verschließende plattenartige Luftführung, die einen Lufteinlass für in das Rohr einzuströmende Luft und einen Luftauslass für aus dem Rohr auszuströmende Luft aufweist, und aufweisend eine Strömungseinrichtung mit einer Strömungsmaschine.

Derartige Belüftungssysteme bzw. Klimaanlagen sind dem Grunde nach aus dem Stand der Technik bekannt. Sie dienen dem Zweck, ein dezentrales Belüftungssystem bereitzustellen, welches in Gebäuden, insbesondere in solchen ohne Belüftungssystem, nachgerüstet werden kann. Hierfür wird in einfacher Weise die Außenwand des Gebäudes mit einer die Außenwand durchgreifenden Bohrung versehen. Das Belüftungssystem wird anschließend in die Bohrung eingesetzt, wobei Innen- und Außenseite der Wand mit Luftführungen versehen werden, die Lufteinlässe und Luftauslässe bereitstellen. Die. Luftführungen dienen einerseits ästhetischen Zwecken und andererseits der gezielten Zu- und Abführung der zu Zu- und Abluft zum im Rohr befindlichen Wärmetauscher und umgekehrt. Innerhalb des Rohres sind Ventilatoren angeordnet, um für den notwendigen Volumenstrom durch den Wärmetauscher zu sorgen.

Ein derartiges System ist beispielsweise aus der WO 2016/096965 A1 bekannt. Weitere aus dem Stand der Technik bekannte Systeme sind in DE 40 02 560 A1, EP 2 642 210 A1, DE 35 45 648 A1, DE 299 06 375 U1 und DE 197 34 955 A1 offenbart.

Obgleich sich derartige Systeme im Stand der Technik bewährt haben, besteht Verbesserungsbedarf hinsichtlich deren Platzbedarf, Lautstärke und Effizienz. Dies deshalb, da gattungsgemäße Systeme über vergleichsweise große sowie leistungsstarke Ventilatoren und Wärmetauscher verfügen, um die erforderliche Leistung zu erbringen.

Es ist daher die Aufgabe der Erfindung, ein System zur Belüftung von Räumen anzugeben, das gegenüber den aus dem Stand der Technik bekannten Systemen hinsichtlich Platzbedarf und Energieeffizienz verbessert ist.

Zur Lösung der Aufgabe schlägt die Erfindung ein gattungsgemäßes System gemäss Anspruch 1 vor, das sich dadurch auszeichnet, dass die Strömungseinrichtung einen Temperaturkörper aufweist, der auf der rohrentfernten Seite der Luftführung luftauslassseitig angeordnet ist.

Ausgangspunkt für die Erfindung sind vorbekannte Lüftungseinrichtungen, die mittels eines Wanddurchbruchs realisiert sind. Demgemäß gibt es ein außenliegendes Lüftungsteil einerseits und ein innenliegendes Lüftungsteil andererseits, die strömungstechnisch mittels eines Rohres verbunden sind, welches durch einen Wanddurchbruch geführt ist. Mit dieser Lüftungseinrichtung kann verbrauchte Innenluft nach außen transportiert bzw. Frischluft von außen nach innen verbracht werden.

Es ist erfindungsgemäß vorgesehen, innenseitig einen Temperaturkörper, d. h. einen Heizvorzusehen, der vor den innenliegenden Austritt der vorbekannten Geräteeinheit angeordnet wird. Vorzugsweise weist der Temperaturkörper ein Rohrregister zur Führung eines Heizmediums auf.

Diese Ausgestaltung hat zum einen ästhetische Gründe. Zum anderen aber auch, dass insbesondere bei der Verwendung eines Temperaturkörpers als Heizkörper eine Sogwirkung in Form einer Konvektionspumpe entsteht. Denn die von außen herein transportierte Luft wird am Heizkörper erwärmt und strömt nach oben ab, wobei hinsichtlich der nachströmenden Luft eine Sogwirkung entsteht. Im Ergebnis kann eine verringerte Ventilatorleistung angelegt werden oder aber bei gleichbleibender Ventilatorleistung ist die Menge an in den Innenraum transportierter Luft vergrößert. Zudem wird in vorteilhafter Weise eine Schallisolation erreicht.

Gemäß einer bevorzugten Ausgestaltung der Erfindung weist die Strömungseinrichtung auf der rohrentfernten Seite der Luftführung luftauslassseitig ein Gehäuse zur Aufnahme des Temperaturkörpers auf. Um den Volumenstrom über den Temperaturkörper zu verbessern, ist es vorzugsweise vorgesehen, dass das Gehäuse luftführungsseitig offen ausgebildet ist oder über eine Wandung verfügt, die eine Strömungsöffnung bereitstellt.

Gemäß einem bevorzugten Merkmal der Erfindung das Gehäuse nach Art einer Klappe ausgebildet und dient der verschwenkbaren Aufnahme des Temperaturkörpers relativ zur Luftführung. Dies hat einerseits den Vorteil, dass die aus dem Luftauslass strömende Luft in einem gewünschten Winkel über den Temperaturkörper, insbesondere über das Rohrregister strömen kann, wodurch Temperierungsleistung und Abströmrichtung der Luft beeinflusst und an örtliche Begebenheiten angepasst werden können. Hierzu kann das klappenförmige Gehäuse in einem bestimmten Winkel verschwenkt werden. Es ist dabei vorgesehen, dass die Schwenkachse des Gehäuses im bestimmungsgemäß eingebauten Zustand des Systems in Horizontalrichtung der Innenwand verläuft. Das Gehäuse schwenkt insofern um die horizontale Schwenkachse in vertikaler Richtung entweder nach oben oder nach unten.

Gemäß einem weiteren bevorzugten Merkmal der Erfindung ist das Gehäuse zwischen wenigstens einer Gebrauchsstellung und einer Wartungsstellung verschwenkbar. Durch die Anordnung der Strömungseinrichtung auf der Innenseite der Gebäudewand vor der Ausnehmung bzw. der Bohrung ist der Zugang zu dem den Wärmetauscher aufnehmenden Rohr in Gebrauchsstellung des Gehäuses nicht möglich. Um dennoch den Wärmetauscher warten oder austauschen zu können, ist es vorzugsweise vorgesehen, dass das Gehäuse in eine Wartungsstellung verschwenkt werden kann. Vorzugsweise handelt es sich hierbei um die Endposition des Gehäuses, die erreicht ist, wenn das Gehäuse über den maximalen Schwenkweg bewegt wurde. Es ist hierzu vorgesehen, dass das Gehäuse mit einem mechanischen Anschlag zusammenwirkt, in dem es mit einem entsprechenden Blockierelement versehen ist, welches vorzugsweise formschlüssig mit dem Anschlag verbindbar ist. Es ist bevorzugt, dass der maximale Schwenkwinkel des Gehäuses zwischen Gebrauchsstellung und Wartungsstellung 90°, vorzugsweise 65° bis 90°, weiter bevorzugt 80° bis 90°, beträgt. Hierdurch ist das Gehäuse damit in eine Position schwenkbar, die den freien Zugang zu dem im Inneren des Rohrs befindlichen Wärmetauscher gestattet. Wartungs- und Reparaturaufwand sind dadurch deutlich verringert.

Gemäß einer bevorzugten Ausgestaltung der Erfindung verfügt das System über eine an der Wand, vorzugsweise der Innenwand, des Gebäudes fixierbare Befestigungseinrichtung, an welcher das Gehäuse gegenüber der Luftführung verschwenkbar befestigt ist. Diese kann vorzugsweise ein Gelenkelement aufweisen, welches mit einem am Gehäuse ausgebildeten korrespondierenden Gelenkelement in Eingriff steht. Die Befestigungseinrichtung kann im bestimmungsgemäßen Verwendungsfall in die Wand geschraubt oder an die Wand geklebt sein. Vorzugsweise stellt die Befestigungseinrichtung den vorgenannten mechanischen Anschlag bereit, der die Endposition des Gehäuses nach seinem maximalen Schwenkweg (Wartungsstellung) definiert. Der Anschlag wirkt dabei in der Wartungsstellung mit einem am Gehäuse ausgebildeten Blockierelement zusammen. Es ist insoweit bevorzugt vorgesehen, dass die Befestigungseinrichtung gelenkig mit dem Gehäuse verbunden ist.

Gemäß einem bevorzugten Merkmal der Erfindung weist die Befestigungseinrichtung eine Schiene zur linearbeweglichen Führung des Gehäuses auf. Die Schiene ist dabei vorzugsweise entlang der Höhenrichtung der Gebäudewand angeordnet. Es ist vorgesehen, dass die Schiene mit einem Gleitelement, welches mit dem Gehäuse verbindbar ist, derart zusammenwirkt, dass das Gehäuse in einer Richtung quer zur Schwenkrichtung stabilisiert ist. Diese Ausgestaltung dient dabei einerseits der Verbesserung der mechanischen Stabilität des Gehäuses während des Schwenkvorgangs. Gemäß einer bevorzugten Ausgestaltung stellt die Schiene eine sich in Längsrichtung der Schiene erstreckende Nut bereit. Es ist vorgesehen, dass eine korrespondierend zur Nut ausgebildete Feder innerhalb der Nut linearbeweglich geführt ist.

Gemäß einem bevorzugten Merkmal der Erfindung ist das Gleitelement über eine zweigliedrige Gelenkverbindung, vorzugsweise ein Gelenkarm, mit dem Gehäuse verbunden. Hierdurch ist eine besonders platzsparende Ausgestaltung erreicht.

Gemäß einem bevorzugten Merkmal der Erfindung sind zwei separate Schienen vorgesehen, die beidseits des Rohres an der Innenwand fixierbar sind. In diesem Fall ist für jede Schiene ein Gleitelement vorgesehen, die jeweils mit einer zweigliedrigen Gelenkverbindung mit dem Gehäuse verbunden sind. Hierdurch ist eine weitere Verbesserung der mechanischen Stabilität quer zur Schwenkrichtung in vorteilhafter Weise zu erreichen.

Gemäß einem weiteren bevorzugten Merkmal der Erfindung ist es vorgesehen, dass die Strömungsmaschine der Strömungseinrichtung einen Antrieb aufweist, welcher von dem schwenkbaren Gehäuse aufgenommen ist. Im Stand der Technik ist der gesamte Ventilator inklusive Antrieb und Laufrad im Rohr angeordnet. Die dortigen Systeme sind daher nur für hinreichend dicke Außenwände geeignet. Durch die räumliche Verlagerung des Antriebs in den ansonsten ungenutzten Schwenkraum verringert sich der im Rohr für die einzelnen Komponenten benötigte Platz. In vorteilhafter Weise kann das Rohr hierdurch verkürzt werden und ist daher auch für Wände mit geringerer Wandstärke geeignet.

Gemäß einer bevorzugten Ausgestaltung der Erfindung ist es vorgesehen, dass die Strömungsmaschine der Strömungseinrichtung ein Laufrad aufweist, welches von dem schwenkbaren Gehäuse aufgenommen ist. Im Stand der Technik ist der gesamte Ventilator inklusive Antrieb und Laufrad im Rohr angeordnet. Die dortigen Systeme sind daher nur für hinreichend dicke Außenwände geeignet. Durch die räumliche Verlagerung des Laufrads in den ansonsten ungenutzten Schwenkraum verringert sich der im Rohr für die einzelnen Komponenten benötigte Platz. In vorteilhafter Weise kann das Rohr hierdurch verkürzt werden und ist daher auch für Wände mit geringerer Wandstärke geeignet.

Gemäß einer besonders bevorzugten Ausgestaltung der Erfindung ist die gesamte Strömungsmaschine im schwenkbaren Gehäuse der Strömungseinrichtung angeordnet. In diesem Fall sind Antrieb und Laufrad im Gehäuse angeordnet. Hierdurch ergibt sich gegenüber den aus dem Stand der Technik bekannten Systemen eine weitere Platzersparnis, die zu einem weiteren Einsatzgebiet insbesondere auch für vergleichsweise dünne Wände führt. Vorzugsweise ist die Strömungsmaschine als Ventilator ausgebildet.

Gemäß einem bevorzugten Merkmal der Erfindung weist das System eine Steuerungseinheit auf, die der lageabhängigen Ansteuerung und/oder Abschaltung des Antriebs der Strömungsmaschine dient. Es ist vorzugsweise vorgesehen, dass die Ventilatorleistung mit zunehmendem Schwenkwinkel oder Schwenkweg gedrosselt wird. Dies kann kontinuierlich oder stufenweise erfolgen. In vorteilhafter Weise kann hierdurch der Energieverbrauch des Systems gesenkt werden. Darüber hinaus spielen sicherheitstechnische Aspekte eine Rolle. Zum einen wird vermieden, dass sich der Benutzer an beweglichen Teilen der Strömungseinrichtung, wie insbesondere dem Ventilator, verletzt. Zum anderen wird verhindert, dass eine in Höhenrichtung des Raumes entlang der Wand gerichtete Zwangskonvektion erfolgt, die Schäden an der Einrichtung, insbesondere an Bildern und Lampen, verursacht. Es ist deshalb bevorzugt vorgesehen, dass mittels der Steuerungseinheit detektierbar ist, ob sich die Klappe in der wenigstens einen Gebrauchsstellung oder der Wartungsstellung befindet. In diesem Fall ist es bevorzugt, dass der Antrieb der Strömungseinrichtung mittels der Steuerungseinheit automatisiert abschaltbar ist, wenn sich die Klappe in der Wartungsstellung befindet. In Wartungsstellung befindet sich das Gehäuse in einer um beispielsweise 90° gegenüber der Gebrauchsstellung verschwenkten Stellung. In diesem Fall weist die offen ausgebildete Seite bzw. die mit einer Öffnung versehene Seite des Gehäuses in Richtung Raumdecke. Antrieb und/oder Laufrad liegen in diesem Fall offen und weisen ebenfalls in Deckenrichtung. Die Gefahr der körperlichen Verletzung und/oder der Beschädigung von Einrichtungsgegenständen wird durch die automatisierte Abschaltung vorteilhaft verhindert.

Die Erfindung betrifft ferner die Verwendung eines erfindungsgemäßen Systems als dezentrale Einzelbelüftungsanlage, bei der das System in eine eine Hausaußenwand durchgreifende Ausnehmung, insbesondere eine Bohrung, derart eingesetzt wird, dass sich das Rohr und der darin angeordnete Wärmetauscher innerhalb der Ausnehmung befinden und dass sich die Luftführung und die Strömungseinrichtung außerhalb der Ausnehmung auf der dem Hausinneren zugewandten Seite der Hausaußenwand befinden und dass das Rohr andernendseitig eine Außenblende trägt, die außerhalb der Ausnehmung auf der der Umgebung zugewandten Seite der Hausaußenwand angeordnet ist.

Vorzugsweise wird dabei ein außenumfangsseitig des Rohrs befindlicher umlaufender Spalt zwischen Außenumfang des Rohrs und Innenumfang der Ausnehmung mit einem Dichtungsmittel verschlossen.

Die Erfindung wird nachfolgend anhand eines für den Fachmann nicht beschränkend zu verstehenden Ausführungsbeispiels verdeutlicht. Dabei zeigen
- Fig.1: System gemäß der Erfindung im freien Zustand in perspektivischer Darstellung von vorne;
- Fig.2: System gemäß der Erfindung im freien zustand in perspektivischer Darstellung von hinten;
- Fig.3: System gemäß der Erfindung im eingebauten Zustand in perspektivischer Darstellung von einer Seite;
- Fig. 4: System gemäß der Erfindung im eingebauten Zustand in perspektivischer Darstellung von der anderen Seite.

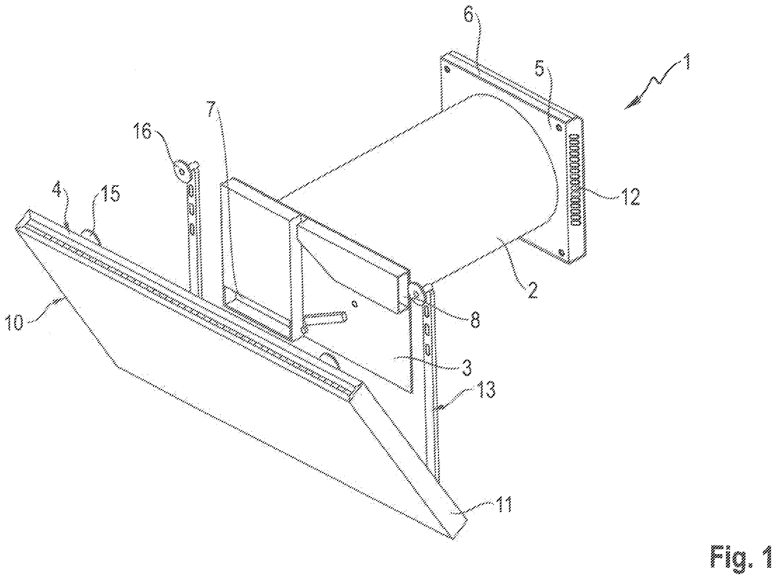

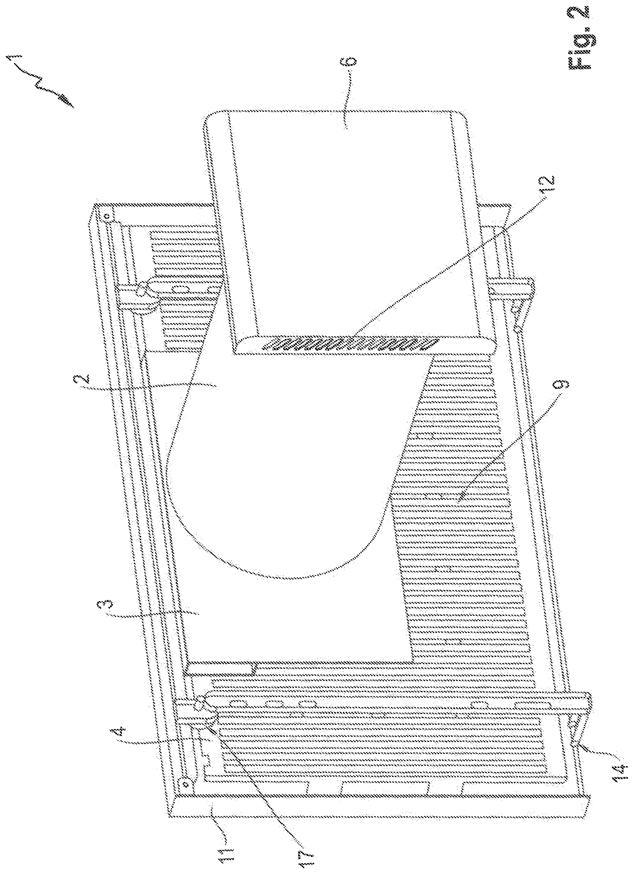

Figuren 1 und 2 zeigen ein erfindungsgemäßes Belüftungssystem 1 in der Ausgestaltung als dezentrale Einzelbelüftungsanlage.

Das Belüftungssystem 1 weist ein Rohr 2, eine raumseitige Luftführung 3, einen raumseitigen Temperaturkörper 4 und eine außenseitige Luftführung 5 und eine außenseitige Blende 6 auf.

Das Belüftungssystem 1 wird in eine in der Außenwand eines Gebäudes ausgebildete nicht dargestellte Bohrung eingesetzt. Dabei ist das Rohr 2 vollständig von der Bohrung aufgenommen.

Die beidseitigen Rohrenden sind dabei jeweils mit Luftführungen 3, 5 teilweise verschlossen.

Innerhalb des Rohres 2 befinden sich vorliegend ein Wärmetauscher und beidseitig des Wärmetauschers Strömungskanäle für die Zu- und Ableitung der Luft. Diese Strömungskanäle sind endseitig mit den Luftführungen 3, 5 strömungstechnisch verbunden. Wobei die Luftführungen 3, 5 jeweils einen Luftauslass 7 und einen Lufteinlass 8 aufweisen.

Der Temperaturkörper 4 ist vorliegend als Heizkörper ausgebildet und verfügt zu diesem Zweck über ein in Figur 2 dargestelltes Rohrregister 9 zur Führung eines Heizmediums. Der Temperaturkörper 4 ist Teil einer Strömungseinrichtung 10. Die Strömungseinrichtung 10 stellt ein Gehäuse 11 bereit, in welchem der Temperaturkörper 4 angeordnet ist. Wie Figur 2 zu entnehmen ist, ist das Gehäuse 11 luftführungsseitig vollständig offen ausgebildet.

Im Gehäuse 11 ist ferner eine nicht dargestellte Strömungsmaschine angeordnet. Die Strömungsmaschine dient der Erzeugung einer Zwangskonvektion zur Gewährleistung eines ausreichenden Volumenstroms durch den Wärmetauscher. Vorliegend ist die Strömungsmaschine als Ventilator ausgebildet. Er kann gegenüber dem Stand der Technik kleiner und leistungsschwächer ausgebildet sein, da der vom Heizkörper 4 ausgehende Sog, den Luftstrom durch den Plattenwärmetauscher unterstützt.

Die außenseitige Luftführung 5 ist aus ästhetischen und sicherheitstechnischen Gründen mit einer Blende 6 verdeckt. Der Luftaustausch findet über die Luftschlitze 12 der Blende 6 statt.

Ferner ist eine Befestigungseinrichtung 13 in Form von Schienen abgebildet. Die Schienen sind beidseitig der Luftführung 3 an der Innenseite der Außenwand mit der Außenwand verschraubbar. Die Befestigungseinrichtung 13 dient der gelenkigen Befestigung des Gehäuses 11 an der Innenseite der Außenwand. Durch Gelenkverbindung 14 zwischen Gehäuse 11 und den Schienen der Befestigungseinrichtung 13 ist das Gehäuse 11 nach Art einer Klappe ausgebildet. Das Gehäuse 11 kann, wie in Figur 1 zu erkennen ist, um eine untere horizontale Schwenkachse vertikal verschwenkt werden. Ähnlich der Klappe einer Spülmaschine.

Zur Verhinderung einer ungewollten Schwenkbewegung ist das Gehäuse oberseitig mittels eines Rastmittels 15 an einem korrespondierenden Rastmittel 16 der Befestigungseinrichtung gesichert. Zusammen bilden die Rastmittel 15, 16 eine Rastverbindung 17.

Das Gehäuse 11 befindet sich in der Darstellung nach Figur 1 in einer zwischen einer Gebrauchsstellung und einer Wartungsstellungen befindlichen Stellung mit einem Schwenkwinkel von 45°. In Figur 2 befindet sich das Gehäuse 11 in der Gebrauchsstellung. Der Schwenkwinkel zwischen Befestigungseinrichtung 13 und Gehäuse 11 beträgt in diesem Fall 0°.

Das System 1 verfügt über eine nicht dargestellte Steuerungseinheit, mit der Schwenkwinkel des Gehäuses überwacht wird. Ist die Wartungsstellung mit einem Schwenkwinkel von vorliegend 90° erreicht, wird der Ventilator automatisch abgeschaltet um Schäden zu vermeiden und Energie zu sparen.

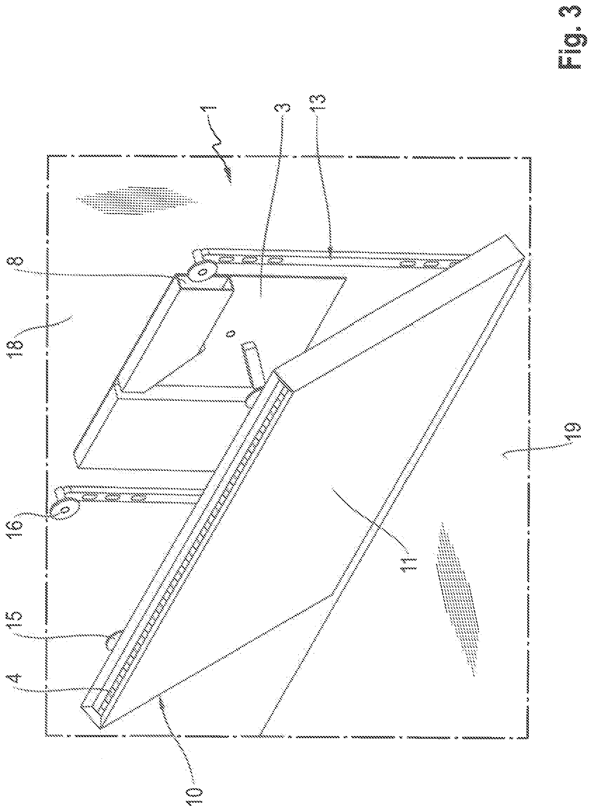

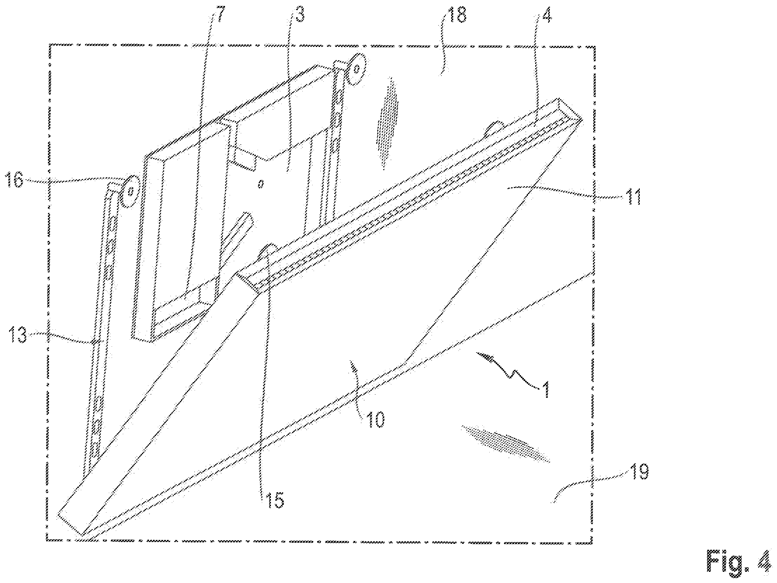

Die Figuren 3 und 4 zeigen den im Rauminneren befindlichen Teil des erfindungsgemäßen Belüftungssystems 1 im eingebauten Zustand. Zu erkennen ist, dass die Schienen der Befestigungseinrichtung 13 mit der Innenseite 18 der Außenwand verschraubt sind.

Das Gehäuse 11 ist dabei gegenüber der Innenseite der Außenwand um eine in horizontaler Richtung parallel zum Boden 19 verlaufenden Schwenkachse schwenkbar.

### Bezugszeichen

- 1: Belüftungssystem
- 2: Rohr
- 3: Luftführung
- 4: Temperaturkörper
- 5: Luftführung
- 6: Blende
- 7: Luftauslass
- 8: Lufteinlass
- 9: Rohrregister
- 10: Strömungseinrichtung
- 11: Gehäuse
- 12: Luftschlitze
- 13: Befestigungseinrichtung
- 14: Gelenkverbindung
- 15: Rastmittel
- 16: Rastmittel
- 17: Rastverbindung
- 18: Innenseite der Aussenwand
- 19: Boden

## Patentansprüche

1. System zur Belüftung (1), insbesondere zur Klimatisierung, von Räumen, welches in eine eine Wand, insbesondere eine Außenwand, eines Hauses durchgreifende Ausnehmung einsetzbar ist, aufweisend ein Rohr (2), in welchem ein Wärmetauscher angeordnet ist, und aufweisend eine das Rohr (2) einendseitig teilweise verschließende plattenartige Luftführung (3), die einen Lufteinlass (8) für in das Rohr (2) einzuströmende Luft und einen Luftauslass (7) für aus dem Rohr (2) auszuströmende Luft aufweist, und aufweisend eine Strömungseinrichtung (10) mit einer Strömungsmaschine, **dadurch gekennzeichnet, dass** die Strömungseinrichtung (10) einen Temperaturkörper (4) aufweist, der auf der rohrentfernten Seite der Luftführung (3) luftauslassseitig vor dem Luftauslass (7) derart angeordnet ist, dass von aussen herein transportierte Luft am Temperaturkörper (4) bei der Verwendung als Heizkörper erwärmt werden kann.

2. System (1) nach Anspruch 1, **dadurch gekennzeichnet, dass** die Strömungseinrichtung (10) auf der rohrentfernten Seite der Luftführung (3) luftauslassseitig ein nach Art einer Klappe ausgebildetes Gehäuse (11) zur verschwenkbaren Aufnahme des Temperaturkörpers (4) relativ zur Luftführung (3) aufweist.

3. System (1) nach Anspruch 2, **dadurch gekennzeichnet, dass** das Gehäuse (11) zwischen wenigstens einer Gebrauchsstellung und einer Wartungsstellung verschwenkbar ist.

4. System (1) nach Anspruch 3, **gekennzeichnet durch** eine an der Wand fixierbare Befestigungseinrichtung (13), an welcher das Gehäuse (11) gegenüber der Luftführung (3) verschwenkbar befestigt ist.

5. System (1) nach Anspruch 4, **dadurch gekennzeichnet, dass** die Befestigungseinrichtung (13) gelenkig mit dem Gehäuse (11) verbunden ist.

6. System (1) nach einem der Ansprüche 4 oder 5, **dadurch gekennzeichnet, dass** die Befestigungseinrichtung (13) eine Schiene aufweist, in welcher ein Befestigungselement der Klappe linearbeweglich geführt ist.

7. System (1) nach einem der Ansprüche 2 bis 6, **dadurch gekennzeichnet, dass** die Strömungsmaschine der Strömungseinrichtung (10) einen Antrieb aufweist, welcher von dem schwenkbaren Gehäuse (11) aufgenommen ist.

8. System (1) nach einem der Ansprüche 2 bis 7, **dadurch gekennzeichnet, dass** die Strömungsmaschine der Strömungseinrichtung (10) ein Laufrad aufweist, welches von dem schwenkbaren Gehäuse (11) aufgenommen ist.

9. System (1) nach einem der Ansprüche 2 bis 8, **dadurch gekennzeichnet, dass** die Strömungsmaschine als Ventilator ausgebildet ist, der vollständig von dem schwenkbaren Gehäuse (11) aufgenommen ist.

10. System (1) nach einem der Ansprüche 3 bis 9, **gekennzeichnet durch** eine Steuerungseinheit die der lageabhängigen Ansteuerung und/oder Abschaltung des Antriebs dient.

11. System (1) nach Anspruch 10, **dadurch gekennzeichnet, dass** mittels der Steuerungseinheit detektierbar ist, ob sich die Klappe in der wenigstens einen Gebrauchsstellung oder der Wartungsstellung befindet.

12. System (1) nach Anspruch 11, **dadurch gekennzeichnet, dass** der Antrieb der Strömungseinrichtung (10) mittels der Steuerungseinheit automatisiert abschaltbar ist, wenn sich die Klappe in der Wartungsstellung befindet.

13. System (1) nach einem der vorgehenden Ansprüche, **dadurch gekennzeichnet, dass** der Temperaturkörper (4) ein Rohrregister zur Führung eines Heizmediums und/oder eines Kühlmediums aufweist.

14. Verwendung eines Systems (1) nach einem der Ansprüche 1 bis 13, als dezentrale Einzelbelüftungsanlage, bei der das System in eine eine Hausaußenwand durchgreifende Ausnehmung, insbesondere eine Bohrung, derart eingesetzt wird, dass sich das Rohr (2) und der darin angeordnete Wärmetauscher innerhalb der Ausnehmung befinden und dass sich die Luftführung (3) und die Strömungseinrichtung (10) außerhalb der Ausnehmung auf der dem Hausinneren zugewandten Seite der Hausaußenwand befinden und dass Rohr (2) andernendseitig eine Außenblende trägt, die außerhalb der Ausnehmung auf der der Umgebung zugewandten Seite der Hausaußenwand angeordnet ist.

15. Verwendung nach Anspruch 14, **dadurch gekennzeichnet, dass** ein außenumfangsseitig des Rohrs (2) befindlicher umlaufender Spalt zwischen Rohr (2) und Ausnehmung mit einem Dichtungsmittel verschlossen wird.

## Claims

1. System for ventilation (1), in particular for climatisation, of rooms, which is insertable into a recess passing through the outer wall of a house, having a pipe (2) in which a heat exchanger is arranged, and having a sheet-like air guide (3) which partially closes the pipe (2) at one end and which has an air inlet (8) for air flowing into the pipe (2) and an air outlet (7) for air flowing out of the pipe (2), and having a flow device (10) with a flow machine, **characterised in that** the flow device (10) has a temperature body (4) which is arranged on the side distant from the pipe of the air guide (3) on the air outlet side in front of the air outlet (7) in such a way that air transported in from the outside can be heated at the temperature body (4) during use as a heating body.

2. System (1) according to claim 1, **characterised in that** the flow device (10) has, on the side distant of the pipe of the air guide (3) on the air outlet side, a housing (11) designed in a manner of a flap for pivotably receiving the temperature body (4) relative to the air guide (3).

3. System (1) according to claim 2, **characterised in that** the housing (11) is pivotable between at least one use position and a maintenance position.

4. System (1) according to claim 3, **characterised by** a fastening device (13) which can be fastened to the wall and to which the housing (11) is pivotably attached relative to the air guide (3).

5. System (1) according to claim 4, **characterised in that** the fastening device (13) is connected in an articulated manner to the housing (11).

6. System (1) according to one of claims 4 or 5, **characterised in that** the fastening device (13) has a rail in which a fastening element of the flap is guided for linear movement.

7. System (1) according to one of claims 2 to 6, **characterised in that** the flow machine of the flow device (10) has a drive which is accommodated by the pivotable housing (11).

8. System (1) according to one of claims 2 to 7, **characterised in that** the flow machine of the flow device (10) has an impeller which is accommodated by the pivotable housing (11).

9. System (1) according to one of claims 2 to 8, **characterised in that** the flow machine is designed as a fan which is completely accommodated by the pivotable housing (11).

10. System (1) according to one of claims 3 to 9, **characterised by** a control unit which serves the position-dependent activation and/or deactivation of the drive.

11. System (1) according to claim 10, **characterised in that** it is detectable by means of the control unit whether the flap is in the at least one use position or the maintenance position.

12. System (1) according to claim 11, **characterised in that** the drive of the flow device (10) can be switched off in an automated manner by means of the control unit when the flap is in the maintenance position.

13. System (1) according to one of the preceding claims, **characterised in that** the temperature body (4) has a pipe register for guiding a heating medium and/or a cooling medium.

14. Use of a system (1) according to one of claims 1 to 13, as a decentralised individual ventilation system, in which the system is inserted into a recess, in particular a borehole, passing through an outer wall of a house in such a way that the pipe (2) and the heat exchanger arranged therein are located inside the recess and that the air guide (3) and the flow device (10) are located outside the recess on the side of the outer wall of a house facing the interior of the house and that the pipe (2) carries an outer orifice plate at the other end, which is arranged outside the recess on the side of the outer wall of a house facing the environment.

15. Use according to claim 14, **characterised in that** a circumferential gap located on the outer circumference of the pipe (2) between the pipe (2) and the recess is closed with a sealant.

## Revendications

1. Système de ventilation (1), en particulier de climatisation, de pièces, qui peut être inséré dans un évidement traversant un mur, en particulier un mur extérieur, d'une maison, présentant un tube (2) dans lequel est disposé un échangeur de chaleur, et présentant un conduit d'air (3) en forme de plaque fermant partiellement le tube (2) à une extrémité, qui présente une entrée d'air (8) pour l'air à faire sortir dans le tube (2) et une sortie d'air (7) pour l'air à faire sortir du tube (2), et comprenant un dispositif d'écoulement (10) avec une turbomachine, **caractérisé en ce que** le dispositif d'écoulement (10) comprend un corps de température (4) qui est agencé sur le côté éloigné du tube du conduit d'air (3) du côté de la sortie d'air avant la sortie d'air (7) de telle sorte que l'air transporté depuis l'extérieur peut être chauffé sur le corps de température (4) lors de l'utilisation comme radiateur.

2. Système (1) selon la revendication 1, **caractérisé en ce que** le dispositif d'écoulement (10) présente, du côté éloigné du tube du conduit d'air (3), du côté de la sortie d'air, un boîtier (11) conçu à la manière d'un clapet pour recevoir de manière pivotante le corps de température (4) par rapport au conduit d'air (3).

3. Système (1) selon la revendication 2, **caractérisé en ce que** le boîtier (11) est pivotant entre au moins une position d'utilisation et une position de maintenance.

4. Système (1) selon la revendication 3, **caractérisé par** un dispositif de fixation (13) pouvant être fixé au mur, sur lequel le boîtier (11) est fixé de manière pivotante par rapport au conduit d'air (3).

5. Système (1) selon la revendication 4, **caractérisé en ce que** le dispositif de fixation (13) est relié de manière articulée au boîtier (11).

6. Système (1) selon l'une des revendications 4 ou 5, **caractérisé en ce que** le dispositif de fixation (13) comporte un rail dans lequel un élément de fixation du clapet est guidé en déplacement linéaire.

7. Système (1) selon l'une des revendications 2 à 6, **caractérisé en ce que** la turbomachine du dispositif d'écoulement (10) comporte un entraînement qui est reçu par le boîtier pivotant (11).

8. Système (1) selon l'une des revendications 2 à 7, **caractérisé en ce que** la turbomachine du dispositif d'écoulement (10) comporte une roue de roulement qui est logée dans le boîtier pivotant (11).

9. Système (1) selon l'une quelconque des revendications 2 à 8, **caractérisé en ce que** la turbomachine est réalisée sous la forme d'un ventilateur qui est entièrement logé dans le boîtier pivotant (11).

10. Système (1) selon l'une des revendications 3 à 9, **caractérisé par** une unité de commande qui sert à la commande et/ou à la coupure de l'entraînement en fonction de la position.

11. Système (1) selon la revendication 10, **caractérisé en ce qu'**il est possible de détecter, au moyen de l'unité de commande, si le clapet se trouve dans l'au moins une position d'utilisation ou dans la position de maintenance.

12. Système (1) selon la revendication 11, **caractérisé en ce que** l'entraînement du dispositif d'écoulement (10) peut être coupé de manière automatisée au moyen de l'unité de commande lorsque le clapet se trouve dans la position de maintenance.

13. Système (1) selon l'une des revendications précédentes, **caractérisé en ce que** le corps de température (4) présente un registre tubulaire pour le guidage d'un fluide de chauffage et/ou d'un fluide de refroidissement.

14. Utilisation d'un système (1) selon l'une des revendications 1 à 13, en tant qu'installation de ventilation individuelle décentralisée, dans laquelle le système est inséré dans un évidement traversant un mur extérieur de la maison, en particulier un perçage, de telle sorte, que le tube (2) et l'échangeur de chaleur qui y est disposé se trouvent à l'intérieur de l'évidement et que le conduit d'air (3) et le dispositif d'écoulement (10) se trouvent à l'extérieur de l'évidement sur le côté du mur extérieur de la maison qui est tourné vers l'intérieur de la maison et que le tube (2) porte à son autre extrémité un masque extérieur qui est disposé à l'extérieur de l'évidement sur le côté du mur extérieur de la maison qui est tourné vers l'environnement.

15. Utilisation selon la revendication 14, **caractérisée en ce qu'**une fente périphérique se trouvant du côté de la circonférence extérieure du tube (2) entre le tube (2) et l'évidement est fermée par un moyen d'étanchéité.
